Europäisches Patentamt

European Patent Office

Office européen des brevets

(19)

(11) Publication number: **0 200 297**

**A1**

(12)

# EUROPEAN PATENT APPLICATION

(21) Application number: **86301112.8**

(22) Date of filing: **18.02.86**

(51) Int. Cl.⁴: **A 01 N 63/00**
**A 01 N 63/04, A 01 N 59/02**
**A 01 N 59/22**

(30) Priority: **20.03.85 CA 477058**

(43) Date of publication of application:
**05.11.86 Bulletin 86/45**

(84) Designated Contracting States:
**DE FR GB SE**

(71) Applicant: **NORANDA INC.**
**P.O. Box 45 Suite 4500 Commerce Court West**
**Toronto Ontario, M5L 1B6(CA)**

(72) Inventor: **Baltrusaitis, Victor A.**
**185 Chartwell Road**
**Oakville Ontario L6J 3Z7(CA)**

(72) Inventor: **Speyer, Menno R.**
**31 Birch Hill Rd.**
**Baie d'Urfé Quebec H9X 3H6(CA)**

(74) Representative: **Thomas, Roger Tamlyn et al,**
**D. Young & Co. 10 Staple Inn**
**London WC1V 7RD(GB)**

(54) Animal repellent and method of protecting plants against animal browsing.

(57) An animal repellent is disclosed which is based on a metabolic action of a microorganism with an inorganic substance such as compounds of selenium, tellurium and arsenic, to produce a strong, pungent, obnoxious odour which repels animals. Also a method of repelling animals and thereby reducing animal browsing of plants is disclosed, which comprises providing the plants with an effective dose of the novel animal repellent, activating the same, and allowing it to remain on or in the vicinity of the plant for the duration of repellency.

EP 0 200 297 A1

Croydon Printing Company Ltd.

# ANIMAL REPELLENT AND METHOD OF PROTECTING PLANTS
## AGAINST ANIMAL BROWSING

This invention relates to a novel animal repellent. It also relates to a method for protecting plants against animal browsing, especially during their early growing stage when such plants are particularly susceptible to damage due to animal browsing.

The problem of animal browsing of seedlings in reforestation is well known. For example, it is estimated that approximately five hundred million seedlings are planted annually in Canada at a cost of about 60-85 cents per seedling. Approximately 10% of such seedlings are browsed by animals such as deer, rabbits and others. In the United States, it is believed that the number of seedlings planted in reforestation is at least three times the number planted in Canada with approximately the same percentage being browsed by animals. Another area where animal damage is significant is in orchards, especially in those with dwarf variety trees. The deer cause significant damage to both the mature trees and the new saplings reducing the overall productivity of the orchard. The growers of Christmas trees also have to combat the deer damage problem. In both cases, the growers have used a variety of methods to reduce the animal damage problem including the costly alternative of fencing. Obviously, therefore, animal browsing of plants is a very serious and

-2-

expensive problem.

This problem has been addressed by several researchers, but has not been satisfactorily solved. For example, U.S. Patent No. 3,226,291 issued December 28, 1965 to Rediske and Lawrence proposes use of octa lower-alkyl pyrophosphoramides as a systemic compound which renders the plant unpalatable to animals.  The plants are either sprayed with such compound or the soil around the plant is treated therewith so that the compound would penetrate into the plant in sufficient concentration to make the plant repellent to animals, but without killing the plant due to its phytotoxicity. Moreover, Rediske and Lawrence, in an article published in Forest Science, Vol. 8, No. 2, 1962 pages 142-148 examined the use of selenium as a wildlife repellent for Douglas fir seedlings, both as a systemic and as an externally applied product. The conclusion reached in this article was that the maximum non-phytotoxic amount of selenium that can be introduced into the seedlings did not sufficiently deter animals, although if applied by dipping the seedlings into a selenium-Rhoplex mixture, it was satisfactory to reduce consumption by rabbits to 42%.

A more recent U.S. Patent No. 4,388,303 issued June 14, 1983 to Allan describes another systemic method for reducing animal browsing by applying $Na_2SeO_3$, $(NH_4)_2 SeO_3$ or $SeO_2$ to the soil around a seedling so as to introduce systemically into the seedling a sufficient non-phytotoxic dosage of selenium which would be absorbed by the roots and translocate into the foliage, from where it would release some volatile malodorous selenium compounds, such as dimethyl selenide, which would repel animals from browsing the plants.

The present applicants have tested the systemic approach and have found that the plants do not transform systemically a sufficient amount of selenium to release, for a long period of time, enough dimethyl selenide to produce a sufficiently strong and pungent odour capable of deterring animals such as deer. In fact, when applicants have tested Douglas fir seedlings so treated against non treated seedlings for deer repellency, all seedlings were browsed by the deer without any distinction. On the other hand, when the amount of selenium was increased, the seedlings quickly died due to the phytotoxicity of selenium to the plants.

There is another very important disadvantage of treating the soil around the plants with selenium and it relates to the environmental consequences of directly placing Se into the soil. If millions of doses of Se or its compounds are placed into the soil around seedlings, they may present some environmental problems, e.g. Se could be washed out into lakes or rivers in the area where it may affect aquatic life and the like.

-4-

For all these reasons, the systemic approach is clearly unsatisfactory. On the other hand, spraying or dipping approaches are expensive and impractical, since the active ingredients are washed off by precipitation and thus the anti-browsing activity is of short duration.

The applicants have now surprisingly found that when compounds of selenium, such as sodium selenite, as well as some other inorganic substances such as salts and oxides of tellurium and arsenic are metabolized by some microorganisms, they can produce a sufficiently strong, pungent and obnoxious odour in their vicinity to repel animals and they can do so for a sufficiently long period of time to constitute an effective animal repellent.

It is well known that some microorganisms, such as bacteria, fungi, molds, etc can metabolize certain inorganic compounds of selenium, tellurium and arsenic to produce foul smelling gases such as dimethyl selenide, dimethyl telluride and dimethyl arsine. Some references that describe this phenomenon are:

Challenger, F. - "The Biological Methylation of Compounds of Arsenic and Selenium" Chemistry and Industry, July 12, 1935 pp 637-662

Fleming, R.W. and Alexander, M. - "Dimethylselenide and Dimethyltelluride Formation by a Strain of Penicillium", Applied Microbiology, September 1972 pp 424-429

0200297

-5-

Barkes, L. and Fleming R.W. - "Production of
Dimethylselenide Gas from Inorganic
Selenium by Eleven Soil Fungi",
Bulletin of Environmental
Contamination and Toxicology
Vol. 12, No. 3, 1974 pp 308-311

Doran, J.W. and Alexander, M. - "Microbial
Transformation of Selenium",
Applied and Environmental
Microbiology, Vol. 33, No. 1
January 1977 pp 31-37

Summers, A.O. and Silver, S. "Microbial
Transformations of Metals"
Ann. Rev. Microbiol. 1978
32.637-72  pp 661-669

The phenomenon has essentially remained a scientific curiosity since until now it had no practical application.

It has now been found, however, that such microorganisms, when combined with inorganic substances such as salts and oxides of Se, Te and As which produce a pungent, obnoxious odour when metabolized by the microorganism, as well as with sufficient nutrient to allow the microorganism to grow and reproduce for a long period of time, and a suitable carrier therefor, constitute an excellent animal repellent which obviates the disadvantages of the hitherto known repellents.

Thus, the present invention provides for an animal repellent which comprises:

    (a)    a microorganism culture capable of producing a strong, pungent, obnoxious odour when it metabolizes an inorganic substance;

-6-

    (b)   a predetermined amount of said inorganic substance such as to provide said microorganism with sufficient metabolite to enable release of the strong, pungent, obnoxious odour for as long as the microorganism remains active;

    (c)   sufficient nutrient to allow the microorganism to grow and reproduce for a predetermined long period of time; and

    (d)   a suitable carrier for (a), (b) and (c) above.

The invention also includes a method of repelling animals from plants and thereby reducing animal browsing of the plants by providing the plant to be protected with an effective dose of the above repellent, activating the same, and allowing it to remain on or in the vicinity of the plant for the duration of repellency.

Suitable microorganisms for the purposes of the present invention are all microorganisms which, when they metabolize a given inorganic substance, will produce a strong, pungent, obnoxious odour capable of repelling animals from its vicinity at temperatures between about 0°C and 30°C. It is preferred to use microorganisms which already exist in nature, since in most cases they are not pathogenic and do not present any problems that may be created by genetically engineered species.

Examples of suitable bacteria species are: Arthrobacter sp., Corynebacterium sp., Pseudomonas sp. and Agrobacterium sp.

Examples of suitable molds and fungi are Penicillium sp., Fusarium sp., Asperigillum sp., and Scopulariopsis sp.

The most preferred bacteria are those that can be isolated from soil, such as Agrobacterium, Corynebacterium, Pseudomonas, and Arthrobacter since after they have exhausted the nutrient and the metabolite, they can simply return into the soil, without causing any environmental concerns whatsoever.

Examples of specific bacteria strains suitable for the purposes of the present invention are Agrobacterium radiobacter, Pseudomonas fluorescens, Arthrobacter sp. and Corynebacterium sp.

Sometimes it may be useful to use more than one microorganism particularly if a form of symbiosis exists between them. One microorganism can be used to control the rate of metabolization of the inorganic substance by the second microorganism and consequently the rate of release of the obnoxious odour. Also, control over the release rate of nutrients can control the metabolic rate of the microorganisms.

Generally, the chosen strains should be genetically stable, should grow at an adequate rate upon activation, and should efficiently metabolize the given inorganic material to produce a strong, pungent and obnoxious gas to the exclusion of toxic substances. Also, the strain should be readily maintained for long periods of time, preferably at least six months and better yet for up to two years and, during this time, the strain should release a predictable amount of the foul smelling gas at temperatures between about 0°C and 30°C, which gas acts as the animal repellent. The optimum release of the gas should be at temperatures between about 5°C and 20°C.

These various characteristics are generally known in the art and do not constitute the essence of the present invention. A microbiologist will have no difficulty in selecting, isolating and manufacturing the most appropriate microorganism for a given inorganic substance, which will produce the desired effect.

As the inorganic substance, the preferred materials are salts and oxides of selenium, however, other substances such as salts and oxides of tellurium and arsenic, and any other inorganic substances that will release strong, pungent gas when metabolized by the microorganism, without producing environmentally hazardous products, would be acceptable. The preferred form of selenium salt is sodium selenite, which is transformed by the bacteria into dimethyl selenide and apparently produces elemental selenium as a by-product. Tellurium dioxide is also readily transformed to dimethyl telluride by the same strains of bacteria. The same applies for other similar compounds. When these substances are metabolized by the microorganisms they produce gases such as dimethyl selenide, dimethyl telluride and dimethyl arsine which have strong, pungent and unpleasant odours.

The nutrients employed are specific to the microorganisms, but generally consist of carbon-nitrogen substances, such as sugars and amino acids. The bacteria is normally an aerobe and oxygen will thus be required and will usually be obtained from the air.

Also water is needed to activate the microorganism and start as well as continue the reproductive and metabolic reaction. Moreover, when the ambient temperature goes down below freezing, i.e. below about 0°C, the microorganism becomes gradually dormant, but it will again be reactivated when the temperature rises above freezing. The repellent properties of the product remain as a result of a build-up of the gas in the sealed package as well as conditioned learning by the animals that associate the package with a strong pungent and unpleasant odour. When environmental temperatures exceed 30°C the metabolic activity will also be reduced, because temperatures in excess of 30°C are beyond the normal environmental range of the microorganisms. These temperatures would only occur during mid summer when animal browse is not a problem since many types of natural forage are available.

The proportions of the various ingredients in a single dose of the repellent will vary with the actual ingredients used, with the type of plants on which the repellent is applied and with the manner of application, i.e. whether an individual dose is used for each plant or one dose for a plurality of plants or seedlings. Also, obviously, the larger the plant, the greater the dose required. For coniferous seedlings, the preferred single dose would be as follows:

10 to 50 milligrams of the microorganism

10 to 50 milligrams of the metabolite

0.1 to 1 gram of the nutrient

50% of total or more of water on activation,

which represents about 10 drops.

If we consider that the nutrient and whatever other vehicles, or agents that are used for the microorganism culture are called "inoculum", then the preferred concentration of microorganisms would be in the area of $1 \times 10^7$ to $1 \times 10^9$ per gram of inoculum, and the most preferred would be in the area of $1 \times 10^8$ per gram of inoculum. The two main components of the product, the metabolite (e.g. a salt of selenium) and the bacteria, should preferably be kept apart during the production and packaging process steps to prevent the strong odour from developing and presenting an inconvenience in transportation. The repellent may be activated by combining the two key components of the product by

-11-

releasing them from the two pouches of a partitioned package, thereby bringing the bacteria into contact with the selenium compound. When the product is activated it is designed to quickly produce the obnoxious animal repellent odour.

A suitable type of packaging for such a product is a partitioned tube made of gas-permeable material (e.g. some forms of polyethylene) which is biodegradable after several years. The product can be encapsulated therein in desired single dosages and one end of the tube seal can be elongated and slit longitudinally for easy attachment to the seedling or the like at the time of planting. In any case the package must be designed so as to take into account the specific requirements and conditions of the bacteria used, for example protection from environmental factors (rain, snow, direct sunlight, wind, etc.). The package material would be required to permit the odour to escape and a certain amount of oxygen and water vapour to penetrate to the bacterial culture. It would also have to retain most of the initial moisture associated with the product to maintain the metabolic activity of the product.

Products based on cultures of _Corynebacterium_ sp., _Arthrobacter_ sp. and _Pseudomonas fluorescens_ were tested with penned blacktailed deer _Odocoileus hemionus_ in the State of Washington and in the province of British Columbia. In Washington, a test plot with 400 Douglas fir seedlings was established and a total of ten treatments, including controls were tested for a period of two weeks. Animal damage was monitored twice daily. Damage to the control seedlings ranged between 45 and 65% of the total seedlings, while damage to the treated seedlings ranged between 0 and 25%. Treatments consisted of both area and contact types of repellents. Area repellents consisted of either teabags or porous polyethylene bags containing different formulations of the product. Contact types of repellent formulations were prepared by smearing the seedlings with an agar based formulation which adhered to the seedling by mixing a commercially available adhesive with the products. The test deer demonstrated an aversion to the entire test plot after approximately ten days of exposure by refusing to take even the control seedlings distributed throughout the plot. Yet, when additional control seedlings were planted adjacent to the plot, the deer consumed all of them within several hours after they were so planted.

Additional less elaborate tests were conducted with both the packaged and the agar-based product formulations to provide supportive results for the main test. The results of these tests indicated that both types of product formulations were effective repellents when tested independently of each other. Also, the agar-based material, when spread on vexar-type tubing or impregnated into cotton string or wool yarn, provided protection to seedlings even during periods of low temperature and snow.

The test results of the Washington trials were corroborated by tests conducted in British Columbia. Similar types of tests were conducted, as well as a challenge test with pieces of apple placed around different product formulations, and the reaction of three deer were monitored and recorded. The challenge test results clearly indicate that the product formulations repelled the deer from the apple pieces and also indicated that a learned conditioning of the animals was possible.

It is estimated that an effective dose of the animal repellent according to this invention can be produced, packaged and supplied for a price of about 5-10% of the cost of growing and planting the seedlings and would, therefore, constitute an acceptable increase in such cost to avoid or substantially reduce animal browsing.

EXAMPLE

120 teabags, which were supplied empty from a local manufacturer, were filled each with approximately 10 g of fine sawdust. To this substrate in 40 such teabags there were added 35-40 mg of sodium selenite and 20-30 mg of Pseudomonas fluorescens bacteria per teabags. To another 40 teabags there were added 35-40 mg of sodium selenite and 20-30 mg of Corynebacterium equi per teabag. The remaining 40 teabags were left simply with sawdust and were used as controls. The bacteria was activated by moistening the teabags with water. The teabags were attached to bamboo supports which were stuck in the ground adjacent to Douglas fir seedlings so that the bag was at the same level as the terminal of the seedling. These bags were randomly placed in groups of four in rows in a penned enclosure. Seven black-tailed deer were released into the enclosure. Observations of the amount of damage to the seedlings were made twice daily over a period of 14 days. 25 out of 40 control seedlings were browsed by the deer, whereas only 13 out of 40 of the seedlings adjacent to teabags with Pseudomonas fluorescens bacteria were browsed and 15 out of 40 of the seedlings positioned adjacent teabags containing Corynebacterium equi bacteria. It was evident from these results that the treatments of bacteria methylating the selenite were effective in reducing the damage to the test plot seedlings.

CLAIMS

1.    An animal repellent which comprises:

(a)    a microorganism culture capable of producing a strong, pungent, obnoxious odour when it metabolizes an inorganic substance;

(b)    a predetermined amount of said inorganic substance such as to provide said microorganism with sufficient metabolite to enable release of the strong, pungent, obnoxious odour for as long as the microorganism remains active;

(c)    sufficient nutrient to allow the microorganism to grow and reproduce for a predetermined long period of time; and

(d)    a suitable carrier for (a), (b) and (c) above.

2.    An animal repellent according to claim 1, wherein the microorganism consists of a culture of bacteria which exist in nature or it consists of molds or fungi, which bacteria, molds or fungi metabolize said inorganic substance at temperatures between about 0°C and 30°C.

3.    An animal repellent according to claim 2, wherein said bacteria is selected from Pseudomonas sp., Corynebacterium sp., Arthrobacter sp., and Agrobacterium sp. and said molds or fungi are selected from Penicillium sp., Fusarium sp., Aspergillum sp. and Scopulariopsis sp.

4.    An animal repellent according to claims 1, 2 or 3, wherein a plurality of bacteria are used, which are symbiotic with one another.

5.    An animal repellent according to any of claims 1 to 4, wherein the inorganic substance is a salt or oxide of selenium, tellurium or arsenic.

6.    An animal repellent according to any of claims 1 to 5, wherein each effective dose of the repellent contains:

         10 to 50 milligrams of the microorganism

         10 to 50 milligrams of the metabolite

         0.1 to 1 gram of the nutrient, and is preferably activated with water.

7.    An animal repellent according to any of claims 1 to 6, wherein the carrier for the various ingredients is composed of a semipermeable, biodegradable material in which the various ingredients are encapsulated, said carrier preferably being in the form of a slitted tube which can be readily attached to a branch of a plant or seedling.

8.    A method of repelling animals and thereby reducing animal browsing of plants which comprises providing said plants with an effective dose of an animal repellent according to any of claims 1 to 7, activating said repellent so that it produces a strong, pungent, obnoxious odour, and allowing said repellent to remain on or in the vicinity of the plant for the duration of repellency.

9.    Method according to claim 8, wherein the repellent is attached to the plant or is placed near the plant and the plant is a seedling, such as Douglas fir seedling.

10.    Method according to claims 8 or 9, wherein the repellent is activated to produce a duration of repellency between six months and 2 years.

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-4 388 303 (G.G. ALLAN)<br>* Claims; column 1, lines 66-68; column 2, lines 14-20 *<br><br>----- | 1-10 | A 01 N 63/00<br>A 01 N 63/04<br>A 01 N 59/02<br>A 01 N 59/22 |

TECHNICAL FIELDS SEARCHED (Int. Cl.4)

A 01 N

The present search report has been drawn up for all claims

| Place of search | Date of completion of the search | Examiner |
|---|---|---|
| THE HAGUE | 30-07-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO Form 1503. 03.82